# EUROPÄISCHE PATENTSCHRIFT

(11) **EP 1 656 514 B1**
(45) Veröffentlichungstag und Bekanntmachung des Hinweises auf die Patenterteilung: **27.04.2011**
(21) Anmeldenummer: 04762353.3
(22) Anmeldetag: 07.07.2004
(51) Int. Cl.: F16H 61/00

(54) **STUFENLOS EINSTELLBARES GETRIEBE**
CONTINUOUSLY VARIABLE GEARING
TRANSMISSION REGLABLE EN CONTINU

(30) Priorität: 20.08.2003 DE 10338857; 18.12.2003 DE 10359858
(43) Veröffentlichungstag der Anmeldung: 17.05.2006
(73) Patentinhaber: Rohs, Ulrich, Dr., 52351 Düren (DE)
(72) Erfinder: ROHS, Ulrich, 52351 Düren (DE); DRÄGER, Christoph, 52379 Langerwehe (DE); BRANDWITTE, Werner, 52379 Langerwehe (DE)
(74) Vertreter: Reuther, Martin
(86) Internationale Anmeldenummer: PCT/DE2004/001463
(87) Internationale Veröffentlichungsnummer: WO 2005/019701

(56) Entgegenhaltungen:
- EP-A- 0 980 993
- WO-A-03/023256
- DE-A- 19 854 612
- DE-A- 19 911 297
- FR-A- 1 254 308
- GB-A- 827 608
- US-A- 2 178 859
- US-A- 3 242 753
- US-A- 3 881 370
- PATENT ABSTRACTS OF JAPAN Bd. 0102, Nr. 73 (M-518), 17. September 1986 (1986-09-17) & JP 61 096255 A (DAIHATSU MOTOR CO LTD), 14. Mai 1986 (1986-05-14)

## Beschreibung

Die Erfindung betrifft ein stufenlos einstellbares Getriebe mit wenigstens zwei umlaufenden Getriebegliedern, die über ein umlaufendes Verstellgetriebeglied miteinander wechselwirken.

Derartige, stufenlos einstellbare Getriebe sind beispielsweise aus der EP 0 878 641 A1 als Kegelreibringgetriebe bekannt. Die GB 1 296 827, US 5,601,509, US 4,393,964, DE 197 40 406 A1 oder DE 199 58 073 A1 zeigen diesbezüglich alternative Anordnungen. Aus der FR-A-1254308 ist ein getriebe mit den Merkmalen des oberbegriffes des Anspruchs 1 bekannt.

All diesen stufenlos einstellbaren Getrieben ist gemein, dass wenigstens eines der Getriebeglieder, vorzugsweise eines der beiden umlaufenden Getriebeglieder, an einem Gehäuse über ein umlaufendes Lager gelagert ist. Insbesondere kommen diesbezüglich Wälzlager zur Anwendung, wobei ohne Weiteres auch Gleitlager dementsprechend genutzt werden können.

Derartige Lager umfassen regelmäßig einen Standbereich, der am Gehäuse befindlich ist und einen Laufbereich, der mit dem entsprechenden Getriebeglied umläuft. Bei Wälzgetrieben sind diese beiden Bereiche in der Regel durch entsprechende Ringe, auf denen die Wälzkörper umlaufen, gebildet, wobei einer der Ringe am Gehäuse und der andere der Ringe an dem Getriebeglied befestigt ist. Auch Gleitlager weisen Flächen bzw. Bereiche auf, die gehäusefest stehen bzw. mit dem jeweils gelagerten Getriebeglied umlaufen.

Es zeigt ist, dass der Bauraum, der für derartige Lager benötigt wird, bei stufenlos einstellbaren Getrieben regelmäßig verhältnismäßig groß ist, damit ausreichende Lagerkräfte aufgebracht werden können. Es ist Aufgabe vorliegender Erfindung, ein stufenlos einstellbares Getriebe konstruktiv derart umzugestalten, dass auch große bzw. leistungsfähige Lager ohne nennenswerte Bauraumvergrößerung untergebracht werden können.

Als Lösung schlägt die Erfindung ein stufenlos einstellbares Getriebe mit wenigsten zwei umlaufenden Getriebegliedern, die über ein umlaufendes Verstellgetriebeglied miteinander wechselwirken, welches stufenlos bezüglich wenigstens eines der beiden umlaufenden Getriebeglieder verlagerbar ist, vor, bei welchem wenigstens eines der Getriebeglieder an einem Gehäuse über ein umlaufendes Lager gelagert ist, welches einerseits einen Standbereich am Gehäuse und andererseits einen Laufbereich an dem entsprechenden Getriebeglied aufweist, und welches sich dadurch auszeichnet, dass der Standbereich einen kleineren Durchmesser als der Laufbereich aufweist.

Diese Anordnung hat insbesondere bei Lagerstellen, bei denen eine Welle nicht durch das Gehäuse geführt wird, den Vorteil, dass der Lagerdurchmesser auf ein Minimum reduziert werden kann, ohne dass die Eigensteifigkeit des entsprechenden Getriebegliedes nachteilig beeinflusst wird. Bei Lagerstellen, an denen eine Welle das Gehäuse durchbricht, ist dieses Minimum naturgemäß durch den Mindestdurchmesser der jeweiligen Welle nach unten begrenzt, wobei die Anordnung dennoch die vorgenannten Vorteile bringt.

Insbesondere ist es von Vorteil, wenn der Standbereich radial innerhalb des Laufbereichs angeordnet ist, sodass der Bauraum für das Lager auf ein Minimum reduziert wird. Hierbei lässt sich der benötigte Bauraum insbesondere auf ein Minimum reduzieren, wenn das Lager radial innerhalb innerhalb von Bereichen des gelagerten Getriebegliedes angeordnet ist. Auf diese Weise wird in axialer Richtung für das Lager kein zusätzlicher Bauraum benötigt. Diese Anordnung ist insbesondere dann ohne Weiteres zu realisieren, wenn das entsprechende Lager eines der beiden umlaufenden Getriebeglieder des stufenlosen Getriebes lagert, da diese Getriebeglieder bei stufenlosen Getriebegliedern regelmäßig sich weit von ihrer Rotationsachse radial entfernende Bereiche aufweisen, in denen das entsprechende Lager ohne weiteres untergebracht werden kann.

In diesem Zusammenhang beziehen sich die Begriffe "radial" und "axial" jeweils auf das bezüglich des erfindungsgemäßen Lagers betrachtete Getriebeglied.

Die Erfindung lässt sich erfindungsgemäß einfach hinsichtlich eines Lager, welches radial innerhalb eines Getriebes vorgesehen ist, umsetzen, wenn dieses Getriebeglied ein Kegel ist. Dementsprechend ist die Erfindung erfindungsgemäß bei Kegelreibringgetrieben umsetzbar, bei welchen in der Regel verhältnismäßig große Anpresskräfte - und somit verhältnismäßig große Lager - benötigt werden, um ausreichend hohe Drehmomente unter allen Betriebsbedingungen übertragen zu können.

Vorzugsweise ist das Lager an einem in das entsprechende Getriebeglied kragenden Lagerzapfen des Gehäuses angebracht, sodass die Lagerkräfte unmittelbar und kostengünstig vom Gehäuse aufgenommen werden können.

Die Erfindung eignet sich im Zusammenspiel mit Wälzlagern, da hierdurch besonders hohe Lagerkräfte aufgenommen werden können, die durch die entsprechende, erfindungsgemäße Anordnung auch zwischen Lager und Gehäuse vermittelt werden können.

In radialer Hinsicht lässt sich Bauraum sparen, wenn der Standbereich durch das Gehäuse selbst und/oder der Laufbereich durch das entsprechende Getriebeglied ausgebildet ist. Während für ersteres davon auszugehen ist, dass ein Gehäuse hinsichtlich seines Materials nicht unmittelbar als Lauffläche geeignet ist, hat letzteres den Vorteil, dass das Material des Getriebegliedes, welches in der Regel hinsichtlich seiner Lauf- und Reibeigenschaft bereits als Wälzkörper ausgelegt ist, da beispielsweise ein Reibring auf ihm wälzt, entsprechend optimal als Lauffläche für das Lager, insbesondere als Lauffläche für die entsprechenden Wälzkörper, genutzt werden kann.

In der Regel weisen derartige stufenlose Getriebe wenigstens ein Axiallager zur Aufnahme axialer Anpresskräfte wenigstens eines Getriebegliedes auf. Vorzugsweise wird dieses Axiallager auch zur radialen Lagerung eines Antriebs- oder Abtriebsritzels genutzt. In der Regel bringt ein Antriebs- oder Abtriebsritzel nur geringe Radialkräfte auf, die auch von einem Axiallager aufgefangen werden können. Insofern können die für das stufenlos einstellbare Getriebe notwendigen Radiallager in erfindungsgemäßer Weise ausgestaltet werden, wobei auf das Ritzel keine Rücksicht genommen werden braucht. Somit ist es möglich, die Radiallager des stufenlos einstellbaren Getriebes in der Nähe dieses Getriebes oder sogar innerhalb einzelner Getriebeglieder anzuordnen und das Ritzel dennoch betriebssicher und kostengünstig zu lagern. Es versteht sich, dass eine derartige Doppelnutzung eines Axiallagers sowohl zur axialen Verspannung des stufenlosen Getriebes als auch zur Aufnahme von Radialkräften eines Abtriebsritzels auch unabhängig von den übrigen Merkmalen vorliegender Erfindung bei einem stufenlosen Getriebe vorteilhaft für eine Bauraumreduktion einsetzbar ist.

Das Getriebe kann eine Parksperre aufweisen, die in dem das Getriebe umfassenden Antriebsstrang hinter dem Getriebe bzw. vor einem Abtriebsritzel angeordnet ist. Kumulativ bzw. alternativ kann die Parksperre auf einer Abtriebswelle des Getriebes angeordnet sein. Eine derartige Parksperre kann das Getriebe besonders effektiv vor Stößen, die bei parkenden Fahrzeug auf dieses einwirken, schützen, indem die Abtriebswelle bzw. schon das Abtriebsritzel unmittelbar stillgelegt werden und auf diese Weise ein Stoß das stufenlos einstellbare Getriebe selbst nicht mehr erreicht. Es versteht sich, dass eine derartig angeordnete Parksperre auch unabhängig von den übrigen Merkmalen vorliegender Erfindung bei Getrieben, insbesondere bei Kraftfahrzeuggetrieben, vorteilhaft ist.

Das von dem Innenlager gelagerte Getriebeglied kann vorzugsweise eine Dichtungsnut aufweisen, in der eine Dichtung angeordnet ist, wobei insbesondere in die Dichtungsnut ein Dichtungsansatz des Gehäuses ragen kann. Hierdurch kann auch bezüglich der Dichtung - und zwar unabhängig von der Ausgestaltung des Lagers - erheblich Bauraum bei einem stufenlos einstellbaren Getriebe gespart werden, da auf diese Weise die Dichtung wenigstens teilweise innerhalb des jeweiligen Getriebegliedes angeordnet ist und ein stufenlos einstellbares Getriebe regelmäßig Getriebeglieder mit großen radialen Abständen von einer Achse des entsprechenden Getriebegliedes aufweist, innerhalb derer eine entsprechende Nut ohne Weiteres vorgesehen sein kann.

Weitere Vorteile, Ziele und Eigenschaften vorliegender Erfindung werden anhand anliegender Zeichnung erläutert, in welcher ein erfindungsgemäßes Getriebe dargestellt ist.

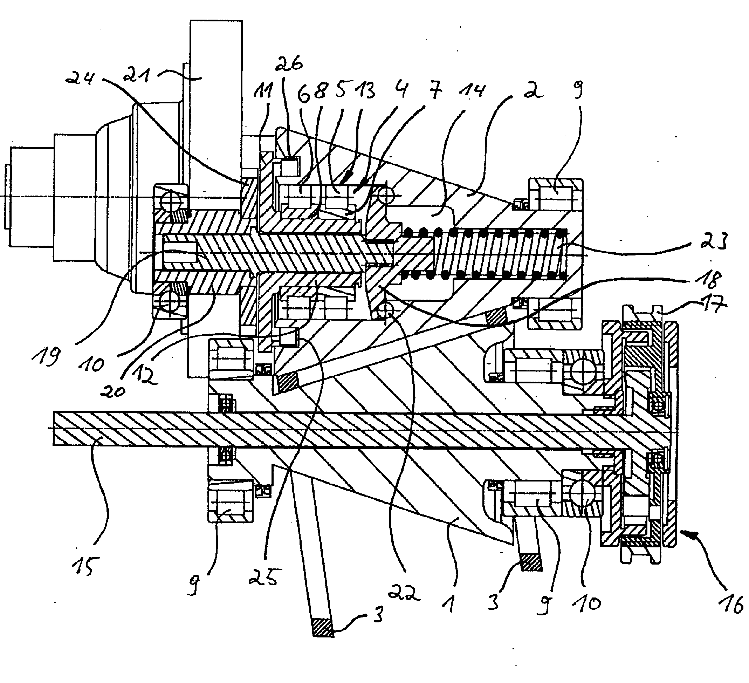

Das in der Figur dargestellte Getriebe umfasst einen Eingangskegel 1 und einen Ausgangskegel 2, die über einen Reibring 3 miteinander wechselwirken. Der Ausgangskegel 2 ist über ein als Innenlager 4 bezeichnetes, erfindungsgemäßes Lager sowie ein Radiallager 9 und ein Axiallager 10 gelagert. Der Eingangskegel 1 hingegen ist lediglich über zwei Radiallager 9 und ein Axiallager 10 gelagert, wobei über die Lager 4, 9 und 10 die notwendigen Anpresskräfte zum Verspannen des Reibringes 3 aufgebracht werden.

Es versteht sich, dass auch bei dem Eingangskegel 1 ein erfindungsgemäßes Innenlager, insbesondere am Kegelstumpf zur Anwendung kommen kann. Das erfindungsgemäße Innenlager 4 umfasst zwei Innenwälzlager 5 und 6, die in einer Ausnehmung 14 des Abtriebskegels 2 angeordnet sind. Die beiden Innenwälzlager 5 und 6 weisen Innenringe 7 und 8 auf, die ihrerseits an dem Gehäuse 11 bzw. auf einem Lagerzapfen 12 des Gehäuses 11, der in die Ausnehmung 14 kragt, befestigt sind. Die Walzen der beiden Innenwälzlager 5 und 6 wälzen kegelseitig auf einem Laufbereich 13 des Abtriebskegels 2, welcher durch einen Teil der Oberfläche der Ausnehmung 14 gebildet wird. Durch diese Anordnung können bei minimalem Durchmesser der Innenwälzlager möglichst große Walzen zur Anwendung kommen.

Vorliegendes Getriebe weist darüber hinaus eine Eingangswelle 15 auf, die über ein Planetengetriebe 16 ein Eingangsdrehmoment auf den Eingangskegel 1 überträgt. Hierbei ist das Planetengetriebe 16 derart ausgestaltet, dass durch eine Synchronisation 17 wahlweise das Sonnenrad des Planetengetriebes 16 bezüglich der Planeten festgelegt werden kann. Durch die hierdurch bedingte Richtungsumkehr wird bei durchlaufenden Planeten ein Rückwärtsgang realisiert, während bei festgelegten Planeten das Getriebe in Vorwärtsrichtung läuft, so dass die Gesamtanordnung äußerst kompakt baut und mit minimalen Verlusten betrieben werden kann, da im Normalbetrieb, also bei einer Vorwärtsbewegung, das Planetengetriebe keine Verluste zu den Gesamtverlusten des Getriebes beiträgt.

Die eingebrachten Drehmomente werden über den Reibring 3 vom Antriebskegel 1 auf den Abtriebskegel 2 übertragen, wobei je nach Lage des Reibringes 3 (es sind in der Figur zwei mögliche Positionen dargestellt) verschiedene Übersetzungsverhältnisse realisiert werden können. Von dem Abtriebskegel 2 wird das Drehmoment auf eine Anpresseinrichtung 18 übertragen, die ihrerseits drehfest bezüglich einer Abtriebswelle 19 gelagert ist. Auf der Abtriebswelle 19 sitzt ein Differentialritzel 20, welches unmittelbar mit einem Differential 21 eines Fahrzeugantriebs kämmt.

Die Anpresseinrichtung 18 umfasst Wälzkörper 22, die in entsprechenden Bahnen an der Anpresseinrichtung 18 sowie an dem Abtriebskegel 2 laufen, wobei die Bahnen derart gestaltet sind, dass ein erhöhtes Drehmoment die Anpresseinrichtung unter Zuhilfenahme eines Federdruckes durch die Feder 23 als Vorspannung von dem Kegel 2 axial abhebt, so dass der Kegel 2 gegen fester den Reibring 3 gepresst wird, wobei die Lager 4, 9 und 10 diesen variablen Anpresskräften begegnen, wie bereits vorstehend erläutert. Auf diese Weise kann die auf den Reibring 3 wirkende Anpresskraft in Abhängigkeit vom übertragenen Drehmoment gewählt werden, wodurch Verluste bei niedrigen Drehmomenten vermieden und eine ausreichende Anpresskraft bei hohen Drehmomenten gewährleistet werden können.

An sich kann das Axiallager 10 des Abtriebskegels 2 auch erfindungsgemäß als Innenlager 4 ausgestaltet sein. Da in vorliegendem Ausführungsbeispiel das Axiallager 10 des Abtriebskegels auch zur Aufnahme der Radialkräfte des Differentialritzels genutzt wird, ist dieses bei vorliegendem Ausführungsbeispiel jedoch nicht der Fall. Es versteht sich, dass eine derartige Doppelnutzung eines Axiallagers sowohl zur axialen Verspannung des stufenlosen Getriebes als auch zur Aufnahme von Radialkräften eines Abtriebsritzels auch unabhängig von den übrigen Merkmalen vorliegender Erfindung bei einem stufenlosen Getriebe vorteilhaft für eine Bauraumreduktion einsetzbar ist. Bei vorliegendem Ausführungsbeispiel ist das Axiallager 10 durch eine Vierpunktlager realisiert, wodurch sich die vorgenannte Aufgabe besonders effektiv umsetzen lässt.

Unmittelbar neben dem Differentialritzel 20 ist kegelseitig eine Parksperre 24 vorgesehen. Diese umfasst ein Ritzel, welches bei völligem Stillstand das Kraftfahrzeuges die Parksperre 24 bezüglich des Gehäuses 11 festlegt. Aufgrund der Lage der Parksperre unmittelbar neben dem Ritzel 20 bzw. bezüglich des Antriebsstranges unmittelbar vor dem Differentialritzel 20 wird das Getriebe besonders effektiv vor Stößen, die bei parkenden Fahrzeug auf dieses einwirken können, geschützt. Insbesondere ist es diesbezüglich vorteilhaft, diese Parksperre 24 bezüglich des Antriebsstranges hinter dem Getriebe anzuordnen.

In dem das Innenlager 4 aufweisenden Kegel ist darüber hinaus im Kegelboden eine Nut 25 vorgesehen, in welche ein entsprechender Ansatz 26 des Gehäuses 11 ragt. Zwischen diesem Ansatz 26 und der Nutoberfläche kann eine Dichtung (nicht dargestellt) angeordnet werden, die einen den Reibring 3 aufnehmenden Raum von der Ausnehmung 14 bzw. von einem die Lager 4, 9 bzw. 10 aufnehmenden Raum dichtend trennt, so dass sich die Fluide des einen Raums, beispielsweise eine Traktionsflüssigkeit für den Reibring, nicht mit den Fluiden des anderen Raums, beispielsweise ein Schmieröl, mischen können.

### Bezugszeichenliste

- 1: Eingangskegel
- 2: Ausgangskegel
- 3: Reibring
- 4: Innenlager
- 5: Innenwälzlager
- 6: Innenwälzlager
- 7: Innenring
- 8: Innenring
- 9: Radiallager
- 10: Axiallager
- 11: Gehäuse
- 12: Lagerzapfen
- 13: Laufbereich
- 14: Ausnehmung
- 15: Eingangswelle
- 16: Planetengetriebe
- 17: Synchronisation
- 18: Anpresseinrichtung
- 19: Abtriebswelle
- 20: Differentialritzel
- 21: Differential
- 22: Wälzkörper
- 23: Feder
- 24: Parksperre
- 25: Dichtungsnut
- 26: Dichtungsansatz

## Patentansprüche

1. Stufenlos einstellbares Getriebe mit wenigstens zwei umlaufenden Kegel (1, 2), die über einen umlaufenden Reibring (3) miteinander wechselwirken, welches stufenlos bezüglich wenigstens eines der beiden umlaufenden Kegel (1,2) verlagerbar ist, wobei wenigstens einer der Kegel (1, 2) an einem Gehäuse (11) über eine umlaufende Lagerung (4) gelagert ist, welche einerseits einen Standbereich (7, 8) am Gehäuse (11) und andererseits einen Laufbereich (13) an dem entsprechenden Kegel (2) aufweist, wobei der Standbereich (7, 8) einen kleineren Durchmesser als der Laufbereich (13) aufweist, **dadurch gekennzeichnet, dass** die umlaufende Lagerung (4) als zwei nebeneinander liegende Radial-Zylinderrollenlager ausgebildet ist und an der Lagerung (4) eine Welle (19) das Gehäuse (11) durchbricht.

2. Getriebe nach Anspruch 1, **dadurch gekennzeichnet, dass** der Standbereich (7, 8) radial innerhalb des Laufbereichs (13) angeordnet ist.

3. Getriebe nach Anspruch 1 oder 2, **dadurch gekennzeichnet, dass** die Lagerung (4) radial innerhalb von Bereichen des gelagerten Kegels (2) angeordnet ist.

4. Getriebe nach einem der Ansprüche 1 bis 3, **dadurch gekennzeichnet, dass** das Gehäuse (11) einen in den entsprechenden Kegel (1,2) kragenden Lagerzapfen (12) aufweist.

5. Getriebe nach einem der Ansprüche 1 bis 4, **dadurch gekennzeichnet, dass** der Standbereich (7, 8) durch das Gehäuse (11) ausgebildet ist.

6. Getriebe nach einem der Ansprüche 1 bis 5, **dadurch gekennzeichnet, dass** der Laufbereich (13) durch den entsprechenden Kegel (2) ausgebildet ist.

7. Getriebe nach einem der Ansprüche 1 bis 6, **dadurch gekennzeichnet, dass** ein Axiallager zur Aufnahme axialer Anpresskräfte wenigstens eines Kegels zur radialen Lagerung eines Antriebs- oder Abtriebsritzels genutzt wird.

8. Getriebe nach einem der Ansprüche 1 bis 7, **gekennzeichnet durch** eine Parksperre (24), die in dem das Getriebe umfassenden Antriebsstrang hinter dem Getriebe angeordnet ist.

9. Getriebe nach Anspruch 8, **dadurch gekennzeichnet, dass** die Parksperre vor einem Abtriebsritzel (20) angeordnet ist.

10. Getriebe nach einem der Ansprüche 1 bis 9, **gekennzeichnet durch** eine Parksperre (24), die auf einer Abtriebswelle (19) des Getriebes angeordnet ist.

11. Getriebe nach einem der Ansprüche 1 bis 10, **dadurch gekennzeichnet, dass** von dem Innenlager (4) gelagerte Kegel (2) eine Dichtungsnut (25) aufweist, in der eine Dichtung angeordnet ist.

12. Getriebe nach Anspruch 11, **dadurch gekennzeichnet, dass** in die Dichtungsnut (25) ein Dichtungsansatz (26) des Gehäuses ragt.

## Claims

1. Steplessly settable gear mechanism with at least two rotating cones (1, 2) which interact with one another by means of a rotating friction ring (3), which gear mechanism can be displaced steplessly with respect to at least one of the two rotating cones (1, 2), wherein at least one of the cones (1, 2) is mounted on a housing (11) by means of a rotating bearing (4) which on the one hand has a static area (7, 8) on the housing (11) and on the other hand has a running area (13) on the corresponding cone (2), wherein the static area (7, 8) has a smaller diameter that the running area (13), **characterised in that** the rotating bearing (4) is constructed as two mutually adjacent cylindrical roller bearings and a shaft (19) penetrates the housing (11) at the bearing (4).

2. Gear mechanism according to Claim 1, **characterised in that** the static area (7, 8) is arranged radially inside the running area (13).

3. Gear mechanism according to Claim 1 or 2, **characterised in that** the bearing (4) is arranged radially inside of areas of the mounted cone (2).

4. Gear mechanism according to any one of Claims 1 to 3, **characterised in that** the housing (11) has a journal (12) which protrudes into the corresponding cone (1, 2).

5. Gear mechanism according to any one of Claims 1 to 4, **characterised in that** the static area (7, 8) is formed by the housing (11).

6. Gear mechanism according to any one of Claims 1 to 5, **characterised in that** the running area (13) is formed by the corresponding cone (2).

7. Gear mechanism according to any one of Claims 1 to 6, **characterised in that** an axial bearing is used for accommodating axial contact forces of at least one cone for the radial bearing of a drive or output gear.

8. Gear mechanism according to any one of Claims 1 to 7, **characterised by** a parking brake (24) which is arranged behind the gear mechanism in the drive train comprising the gear mechanism.

9. Gear mechanism according to Claim 8, **characterised in that** the parking brake is arranged in front of an output gear (20).

10. Gear mechanism according to any one of Claims 1 to 9, **characterised by** a parking brake (24) which is arranged on an output shaft (19) of the gear mechanism.

11. Gear mechanism according to any one of Claims 1 to 10, **characterised in that** the cone (2) mounted by the inner bearing (4) has a sealing groove (25), in which a seal is arranged.

12. Gear mechanism according to Claim 11, **characterised in that** a sealing lug (26) of the housing projects into the sealing groove (25).

## Revendications

1. Engrenage réglable de façon progressive comprenant au moins deux cônes (1, 2) rotatifs, qui sont en interaction l'un avec l'autre au moyen d'une bague de frottement (3) rotative, lequel engrenage peut être déplacé de façon progressive par rapport à au moins l'un des deux cônes (1, 2) rotatifs, au moins l'un des cônes rotatifs (1, 2) étant monté sur un boîtier (11) au moyen d'un logement (4) rotatif, lequel présente d'une part une zone fixe (7, 8) sur le boîtier (11) et d'autre part une zone mobile (13) sur le cône (2) correspondant, la zone fixe (7, 8) présentant un diamètre plus petit que la zone mobile (13), **caractérisé en ce que** le logement (4) mobile est conçu sous forme de deux roulements à galets à charge radiale juxtaposés et un arbre (19) traverse le boîtier (11) sur le logement (4).

2. Engrenage selon la revendication 1, **caractérisé en ce que** la zone fixe (7, 8) est disposée radialement à l'intérieur de la zone mobile (13).

3. Engrenage selon la revendication 1 ou 2, **caractérisé en ce que** le logement (4) est disposé radialement à l'intérieur de zone du cône (2) monté.

4. Engrenage selon l'une quelconque des revendications 1 à 3, **caractérisé en ce que** le boîtier (11) présente un tourillon (12) dépassant dans le cône (1, 2) correspondant.

5. Engrenage selon l'une quelconque des revendications 1 à 4, **caractérisé en ce que** la zone fixe (7, 8) est formée par le boîtier (11).

6. Engrenage selon l'une quelconque des revendications 1 à 5, **caractérisé en ce que** la zone mobile (13) est formée par le cône (2) correspondant.

7. Engrenage selon l'une quelconque des revendications 1 à 6, **caractérisé en ce qu'**un palier axial est utilisé pour la réception de forces d'appui axiales d'au moins un cône pour le logement radial d'un pignon d'entraînement ou d'un pignon de sortie.

8. Engrenage selon l'une quelconque des revendications 1 à 7, **caractérisé par** un blocage de parking (24), qui est disposé dans la branche d'entraînement comprenant l'engrenage en aval de l'engrenage.

9. Engrenage selon la revendication 8, **caractérisé en ce que** le blocage de parking est disposé en amont d'un pignon de sortie (20).

10. Engrenage selon l'une quelconque des revendications 1 à 9, **caractérisé par** un blocage de parking (24), qui est disposé sur un arbre de sortie (19) de l'engrenage.

11. Engrenage selon l'une quelconque des revendications 1 à 10, **caractérisé en ce que** des cônes (2) supportés par le palier intérieur (4) présentent une rainure d'étanchéité (25) dans laquelle est disposé un joint.

12. Engrenage selon la revendication 11, **caractérisé en ce qu'**une embase de joint (26) du boîtier dépasse dans la rainure de joint (25).
